# DEMANDE DE BREVET EUROPEEN

(11) **EP 0 676 845 A1**
(43) Date de publication de la demande: **11.10.1995**
(21) Numéro de dépôt: 95400738.1
(22) Date de dépôt: 03.04.1995
(51) Int. Cl.: H02H 9/06, H02H 3/04

(54) **Système de protection contre les surtensions**

(30) Priorité: 06.04.1994 FR 9404044
(71) Demandeur: CYMEM FRANCE SARL, F-94500 Champigny-Sur-Marne (FR)
(72) Inventeur: Fournier, André, Cabinet Ballot-Schmit, F-75116 Paris (FR)
(74) Mandataire: Ballot, Paul Denis Jacques

(57) **Abrégé**

L'invention concerne un système de protection contre les surtensions sous forme de modules.

L'invention réside dans le fait que le système de protection comprend un dispositif de protection (20) à deux étages (10, 14) et un dispositif de test qui est connecté aux bornes d'un fusible (F) du dispositif de protection. En état de fonctionnement obtenu en poussant le bouton 35, le dispositif de test détecte un défaut d'alimentation (40) ainsi que la fusion du fusible (F), ces défauts étant transmis à un système de surveillance général (39). En outre, en cas de fusion du fusible (F), les conducteurs (A, B) restent protégés par la diode (D2).

Application à la protection des lignes de transmission de la voix de données d'images dans les domaines de la téléphonie, de l'informatique de la vidéo et de la gestion technique et administrative de bâtiment.

## Description

L'invention concerne la protection des équipements électriques contre les surtensions dues, notamment, à la foudre.

Les équipements électriques comprennent des composants électriques et/ou électroniques qui sont endommagés ou détruits lorsque leurs bornes d'entrée ou de sortie sont soumises à des tensions supérieures à certains seuils définis par le constructeur du composant. Il en est ainsi des composants du type transistors à effet de champ lorsque les tensions appliquées sont momentanément supérieures à quelques dizaines de volts.

Les causes de ces surtensions sont multiples et les plus courantes sont l'accumulation de charges électriques sur une connexion par l'effet de l'électricité statique et la foudre qui "s'abat" sur un bâtiment contenant des équipements électriques dont certaines connexions électriques sont à l'extérieur du bâtiment. Dans ce dernier cas, on citera les équipements de lignes téléphoniques qui comportent des conducteurs métalliques reliant l'équipement à l'abonné.

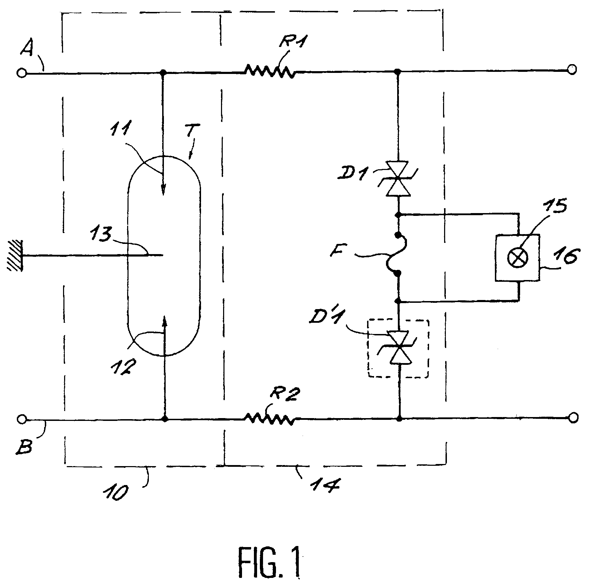

Il existe de nombreux dispositifs de protection contre les surtensions et l'un d'entre eux est représenté par le schéma électrique de principe de la figure 1 pour deux conducteurs A et B à protéger contre les surtensions. Ce dispositif de l'art antérieur comprend un premier étage 10 qui est constitué d'un tube parafoudre à gaz tripolaire T connecté en parallèle sur les conducteurs A et B. Les électrodes 11 et 12 sont connectées respectivement aux conducteurs A et B tandis que la troisième électrode 13 est connectée à la terre.

Un deuxième étage 14 est constitué d'une diode bidirectionnelle écrêteuse D1 et d'un fusible F1 qui sont connectés en série l'un vis-à-vis de l'autre mais en parallèle par rapport aux conducteurs A et B à protéger. Un circuit de test 16 est connecté en parallèle sur le fusible F et comporte un voyant 15. Deux résistances R1 et R2 sont chacune connectées en série respectivement sur les conducteurs A et B et ont pour but de faire amorcer le tube parafoudre à gaz tripolaire T après l'amorçage de la diode D1 dont la tension d'amorçage est inférieure à celle du tube parafoudre T.

Dans une variante, une diode D'1, similaire à la diode D1, peut être connectée entre le fusible F et la ligne B de sorte que le fusible est isolé par rapport aux lignes A et B.

Dans le cas d'une surtension, le tube T conduit et les charges sont écoulées vers la masse par la troisième électrode 13. Par ailleurs, la diode D1 écrête la tension au-dessus d'un certain seuil quelle que soit la polarité et si la surtension est trop importante, le fusible F fond de sorte que le voyant 15 du circuit de test 16 convenablement alimenté s'allume pour indiquer que le fusible est détruit.

Un tel dispositif de protection présente les inconvénients suivants. D'abord, lorsque le fusible a fondu, la protection secondaire réalisée par la diode D1 (et D'1) n'existe plus. Ensuite, le voyant 15 qui s'est allumé, ne peut être détecté que par une inspection visuelle du dispositif, ce qui implique des visites régulières des équipements protégés.

Un but de la présente invention est donc de réaliser un système de protection d'un équipement contre les surtensions du type à tube parafoudre à diode bidirectionnelle et à fusible qui continue à protéger l'équipement même après fusion de fusible.

Un autre but de la présente invention est de réaliser un système de protection d'un équipement contre les surtensions du type à tube parafoudre à diode bidirectionnelle et à fusible qui permet d'indiquer localement et à distance l'état de protection.

L'invention concerne donc un système de protection d'un équipement contre les surtensions qui comprend un dispositif de protection comportant deux étages en parallèle, d'une part, un premier étage constitué d'un tube parafoudre et, d'autre part, un deuxième étage constitué d'un fusible et d'au moins une diode bidirectionnelle écrêteuse, caractérisé en ce qu'il comprend, en outre, un dispositif de test dont les première et deuxième bornes d'entrée sont connectées aux bornes du fusible et qui comprend une diode bidirectionnelle écrêteuse en parallèle sur le fusible et un circuit indicateur de l'état du fusible.

Le circuit indicateur comprend un relais à au moins deux contacts, la partie mobile d'un premier contact étant connectée à la deuxième borne d'entrée du dispositif de test tandis que la partie mobile du deuxième contact est connectée à la première borne d'entrée dudit dispositif de test, une extrémité de l'enroulement dudit relais étant connectée, d'une part, à la partie mobile du deuxième contact par l'intermédiaire d'un bouton-poussoir et d'autre part, au contact travail du premier contact tandis que l'autre extrémité est connectée, d'une part, au contact repos du deuxième contact par l'intermédiaire d'une première diode émettrice et, d'autre part, à la première borne d'entrée du dispositif de test par l'intermédiaire d'une deuxième diode émettrice, la première borne d'entrée étant prévue pour être connectée à une première borne d'un circuit d'alimentation tandis que le point commun des diodes émettrices est prévu pour être connecté à la deuxième borne dudit circuit d'alimentation.

Le relais comprend un troisième contact dont les trois bornes sont prévues pour être connectées à un système de surveillance général de manière à constituer, selon la position de la partie mobile, deux boucles de surveillance qui indiquent l'état repos ou travail dudit relais, l'état repos correspondant à un dispositif de test hors service tandis que l'état travail correspond à un dispositif de test en service.

D'autres caractéristiques et avantages de la présente invention apparaîtront à la lecture de la description suivante d'un exemple particulier de réalisation, ladite description étant faite en relation avec les dessins joints dans lesquels :
- la figure 1 est un schéma électrique de principe d'un dispositif de protection d'un équipement, tels que les deux conducteurs d'une ligne téléphonique, contre les surtensions selon l'art antérieur, et
- la figure 2 est un schéma électrique détaillé d'un système de protection contre les surtensions selon l'invention.

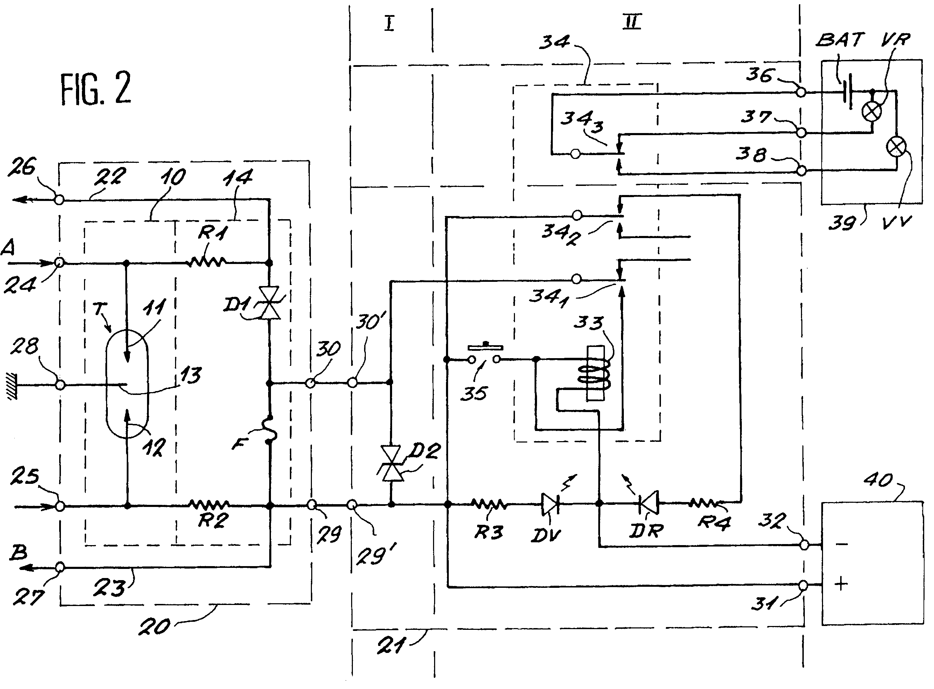

Dans les figures 1 et 2, les références identiques indiquent les mêmes éléments dans des fonctions identiques.

La figure 1, qui correspond à un dispositif de protection selon l'art antérieur, a été décrite dans le préambule.

Le système de protection contre les surtensions selon l'invention sera décrit dans son application à la protection d'une ligne téléphonique constituée de deux conducteurs A et B. Ce système comprend un dispositif de protection 20 proprement dit et un dispositif de test 21.

Le dispositif de protection 20 comprend les éléments décrits dans le préambule comme art antérieur en relation avec la figure 1. Il comprend en plus les conducteurs 22 et 23 qui raccordent le dispositif de protection aux deux autres extrémités de la ligne téléphonique. En effet, ce dispositif de protection se présente sous la forme d'un module qui vient se connecter sur une coupure de la ligne tout en maintenant la continuité électrique de celle-ci.

Ce dispositif de protection 20, sous forme de module, comprend une première borne d'entrée 24 et une première borne de sortie 26 pour le conducteur A et de manière similaire, une deuxième borne d'entrée 25 et une deuxième borne de sortie 27 pour le conducteur B.

La borne d'entrée 24 est connectée, d'une part, directement à une électrode 11 d'un tube parafoudre tripolaire à gaz T et, d'autre part, par l'intermédiaire d'une résistance R1 à une électrode d'une diode bidirectionnelle D1. Le conducteur 22 connecte le point commun de la résistance R1 et de la diode D1 à la borne de sortie 26 par laquelle se continue le conducteur A.

La borne d'entrée 25 est connectée, d'une part, directement à l'autre électrode 12 du tube parafoudre T et, d'autre part, par l'intermédiaire d'une résistance R2 à l'autre électrode de la diode bidirectionnelle D1 par l'intermédiaire d'un fusible.

La troisième électrode 13 du tube T, dite d'écoulement des charges, est connectée à une troisième borne de sortie 28. Dans l'équipement électrique sur lequel se monte le dispositif ou module de protection 20, la borne 28 est connectée à la terre.

Le dispositif 20 présente deux autres bornes de sortie 29 et 30 qui sont connectées pour la quatrième 29 au point commun de la résistance R2 et du fusible F et pour la cinquième 30 au point commun du fusible F et de la diode D1.

Ce sont sur ces quatrième et cinquième bornes de sortie 29, 30 qu'est connecté le dispositif de test 21, sous forme d'un module, par l'intermédiaire d'une première et d'une deuxième bornes d'entrée 29', 30'. Ce dispositif de test 21 comprend une première partie I constituée d'un circuit de protection complémentaire et une deuxième partie II constituant un circuit indicateur de l'état du fusible F et du dispositif de test.

Le circuit de protection complémentaire I comprend une diode bidirectionnelle D2 qui est connectée en parallèle sur ces deux bornes d'entrée 29' et 30' et qui est donc en parallèle sur le fusible F. La première borne d'entrée 29' est connectée, d'une part, directement à une troisième borne d'entrée 31 et, d'autre part, par l'intermédiaire d'une résistance R3 et d'une diode émettrice DV à une quatrième borne d'entrée 32; les deux bornes 31 et 32 sont connectées à un circuit d'alimentation 40 qui fait partie d'un système de surveillance générale référencée 39.

La première borne d'entrée 29' est aussi connectée, par l'intermédiaire d'un bouton-poussoir 35, d'une part, à une première extrémité d'un enroulement 33 d'un relais 34 et d'autre part, à la partie fixe d'un premier contact 34₁ du relais 34. La première borne d'entrée 29' est également connectée à la partie mobile d'un deuxième contact 34₂.

La deuxième borne d'entrée 30' est connectée à la partie mobile du premier contact 34₁.

La deuxième extrémité de l'enroulement 33 est connectée, d'une part, à la cathode de la diode DV qui est elle-même connectée à la borne d'alimentation 32 et, d'autre part, à la partie fixe du contact 34 par l'intermédiaire d'une diode émettrice DR et d'une résistance R4. Le montage des diodes émettrices DV, de couleur verte, et DR, de couleur rouge, est tel que leurs cathodes sont connectées à la borne d'alimentation 32 de polarité négative.

Le relais 34 comprend un troisième contact 34₃ dont le contact mobile est connecté à une première borne de sortie 36 et les deux contacts fixes sont connectés respectivement à une deuxième borne de sortie 37 et une troisième borne de sortie 38.

Les bornes de sortie 36, 37 et 38 sont prévues pour être connectées au système de surveillance générale 39 de manière à constituer une boucle de surveillance. Cette boucle comprend schématiquement une batterie d'alimentation BAT sur la branche de la partie mobile du contact 34₃ connectée à la borne 36, un voyant rouge VR connecté à la borne 37 et un voyant vert VV connectée à la borne 38.

Sur la figure 2, les contacts 34₁, 34₂ et 34₃ ont été représentés à leur état de repos qui correspond au fait que la première extrémité de l'enroulement 33 n'est pas connectée à la borne d'alimentation 31 par suite du bouton-poussoir 35 qui est en position ouverte. Dans cet état, la boucle de surveillance est fermée entre les bornes de sortie 36 et 37 par le contact 34₃. et le voyant rouge VR est allumé.

Les diodes DV et DR sont alimentées par le circuit d'alimentation 40 aux bornes d'entrée 31 et 32 grâce au contact 34₂ et sont donc allumées.

Lorsque l'utilisateur appuie sur le bouton-poussoir 35, l'enroulement 33 est alimenté et les trois contacts 34₁, 34₂ et 34₃ passent à l'état de travail. Dans cet état, l'enroulement 33 reste alimenté par le fusible F et par le contact 34₁ en position travail alors que le bouton poussoir 35 est revenu en position ouverte. La diode DR s'éteint car son anode n'est plus connectée à la borne d'alimentation positive 31 du fait de la position travail du contact 34₂. La diode DV reste allumée car elle est alimentée par les bornes 31 et 32. Par ailleurs, une boucle de surveillance est établie entre les bornes de sortie 36 et 38, ce qui allume le voyant vert VV dans le système de surveillance.

Dans cet état de travail des contacts 34₁, 34₂, et 34₃, le dispositif de protection ou module 20 est sous surveillance du dispositif de test 21, ce qui correspond au voyant DV allumé, au voyant DR éteint et au voyant VV allumé.

Dans le cas où l'alimentation par les bornes 31 et 32 est coupée, le voyant DV s'éteint et les contacts du relais 34 passent en position de repos : la boucle de surveillance 36, 38 est coupée (voyant vert VV correspondant s'éteint) tandis que la boucle de surveillance 36, 37 est fermée et le voyant rouge VR s'allume. Après intervention sur le site pour réalimenter le dispositif de test 21, ce dispositif est remis en fonctionnement en appuyant sur le bouton-poussoir 35.

Dans le cas où le dispositif de protection a été l'objet d'une surtension qui a court-circuité ou non la diode D1 et détruit le fusible F (équivalent à un circuit ouvert), la diode D2 du circuit 21 constitue une protection contre les surtensions éventuelles qui pourraient survenir ultérieurement.

Comme l'enroulement 33 du relais 34 n'est plus alimenté car la diode D2 est bloquée alors que le fusible F est ouvert, les contacts du relais 34 passent en position de repos. Dans cet état de repos, les diodes DV et DR sont conductrices tandis que la boucle de surveillance 36, 37 est fermée, ce qui allume le voyant rouge VR correspondant alors que le voyant vert de la boucle de surveillance 36, 38 s'éteint.

Après intervention sur le module de protection 20 pour remettre un fusible F, le dispositif de test 21 est remis en marche par action sur le bouton-poussoir 35.

L'invention a été décrite en utilisant dans le dispositif de test 21 un relais à trois contacts mais il est clair que l'on peut utiliser, pour des raisons économiques ou de disponibilité de relais, deux relais à deux contacts chacun dont les enroulements seraient en série.

Par ailleurs, l'invention peut être mise en oeuvre également avec un dispositif de protection 20 comprenant la diode D'1 (figure 1) en série avec le fusible F mais connecté du côté opposé à celui de la diode D1. Dans un tel montage, le dispositif de test 21 sera isolé par rapport aux lignes A et B.

Les tables de vérité des différents voyants sont données par le tableau ci-après :

| DV | DR | VV | VR | |
|---|---|---|---|---|
| 1 | 1 | 0 | 1 | Dispositif de test hors service |
| 1 | 0 | 1 | 0 | Dispositif de test en service |
| 0 | 0 | 0 | 1 | Alimentation coupée |
| 1 | 1 | 0 | 1 | Fusible F grillé |

Le dispositif de protection 20 comme le dispositif de test 21 sont de préférence réalisés chacun sous forme d'un module enfichable l'un sur les bornes de l'équipement à protéger et l'autre sur les bornes de sortie 29 et 30 du dispositif de protection. Par ailleurs, les bornes 31, 32, 36, 37, 38 peuvent être aussi enfichables.

L'invention a été décrite dans une application à une ligne téléphonique mais elle s'applique aussi d'une manière générale à la protection contre les surtensions de lignes de transmission de la voix, de données, d'images dans les domaines de la téléphonie, de l'informatique, de la vidéo et de la gestion technique et administrative de bâtiment.

## Revendications

1. Système de protection d'un équipement contre les surtensions, tels que deux conducteurs électriques (A,B) d'une ligne téléphonique ou autre, qui comprend un dispositif de protection à deux étages en parallèle, d'une part, un premier étage (10) constitué d'un tube parafoudre (T) et, d'autre part, un deuxième étage (14) constitué d'un fusible (F) et d'au moins une diode bidirectionnelle écrêteuse (D1) en série, caractérisé en ce qu'il comprend, en outre, un dispositif de test (21) dont les première et deuxième bornes d'entrée (29', 30') sont connectées respectivement aux bornes (29, 30) du fusible (F) et qui comprend un circuit de protection complémentaire (I) qui est monté sur lesdites bornes d'entrée (29', 30') et un circuit indicateur (II) de l'état du fusible (F) et dudit dispositif de test qui est monté sur lesdites bornes d'entrée (29', 30').

2. Système de protection selon la revendication 1, caractérisé en ce que le circuit de protection complémentaire (I) comprend une diode bidirectionnelle (D2) montée en parallèle sur lesdites bornes d'entrée (29', 30') et en ce que le circuit indicateur (II) comprend un relais (34) à au moins deux contacts (34₁, 34₂), la partie mobile d'un premier contact (34₁) étant connectée à la deuxième borne d'entrée (30') du dispositif de test (21) tandis que la partie mobile du deuxième contact (34₂) est connectée à la première borne d'entrée (29') dudit dispositif de test, une extrémité de l'enroulement (33) dudit relais étant connectée, d'une part, à la partie mobile du deuxième contact par l'intermédiaire d'un bouton-poussoir (35) et, d'autre part, au contact travail du premier contact (34₁) tandis que l'autre extrémité est connectée, d'une part, au contact repos du deuxième contact (34₂) par l'intermédiaire d'une première diode émettrice (DR) et, d'autre part, à la première borne d'entrée (29') du dispositif de test par l'intermédiaire d'une deuxième diode émettrice (DV), la première borne d'entrée (29') étant prévue pour être connectée à une première borne d'un circuit d'alimentation (40) tandis que le point commun des diodes émettrices (DV, DR) est prévu pour être connecté à la deuxième borne dudit circuit d'alimentation.

3. Système de protection selon la revendication 2, caractérisé en ce que le dispositif indicateur (II) est mis en état de fonctionnement en appuyant sur le bouton-poussoir (35).

4. Système de protection selon la revendication 2 ou 3, caractérisé en ce que les première et deuxième diodes émettrices (DR, DV) émettent suivant des longueurs d'onde différentes

5. Système de protection selon la revendication 4, caractérisé en ce que la première diode émettrice (DR) émet en lumière rouge tandis que la seconde diode émettrice (DV) émet en lumière verte.

6. Système de protection selon la revendication 4 ou 5, caractérisé en ce que la deuxième diode émettrice (DV) indique l'état de fonctionnement du dispositif de test tandis que la première diode émettrice (DR) indique l'état de fonctionnement du dispositif de protection (20).

7. Système de protection selon l'une des revendications 1 à 6, caractérisé en ce que le relais (34) comprend un troisième contact (34₃) dont les trois bornes sont prévues pour être connectées à un système de surveillance général (39) de manière à constituer, selon la position de la partie mobile, deux boucles de surveillance qui indiquent l'état repos ou travail dudit relais, l'état repos correspondant à un dispositif de test hors service tandis que l'état travail correspond à un dispositif de test en service.

8. Système de protection selon l'une quelconque des revendications précédentes 1 à 7, caractérisé en ce que le dispositif de test est réalisé sous la forme d'un module enfichable.
